(19)

Europäisches
Patentamt

European
Patent Office

Office européen
des brevets

(11)  **EP 2 475 089 A2**

(12)  **EUROPEAN PATENT APPLICATION**

(43) Date of publication:
**11.07.2012   Bulletin 2012/28**

(51) Int Cl.:
***H02M 7/00*** *(2006.01)*

(21) Application number: **11191543.5**

(22) Date of filing: **01.12.2011**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME**<br><br>(30) Priority: **07.12.2010   US 961891**<br><br>(71) Applicant: **General Electric Company Schenectady, New York 12345 (US)** | (72) Inventor: **Kyrberg, Karl Niskayuna, NY New York 12309 (US)**<br><br>(74) Representative: **Bedford, Grant Richard et al GE International Inc.**<br>**Global Patent Operation-Europe**<br>**15 John Adam Street**<br>**London**<br>**WC2N 6LU (GB)** |

(54)  **Electric power system including power converter and rotary transformer and method of assembling same**

(57)      A commutation device (100) includes a transformer device (130) comprising a rotatable portion (164) and a power converter (110) operatively coupled to the transformer device.

FIG. 2

EP 2 475 089 A2

## Description

The subject matter described herein relates generally to electric power devices and, more particularly, to a system that includes power converter apparatus and rotatable electric power transformers and a method of assembling such system.

At least some known electric power systems include a plurality of slip rings and associated brushes to transfer electric power from a stationary electrical device to a rotating electric device. For example, electric power is transmitted to electrical motor drives of many known wind turbine pitch mechanisms via slip rings and brushes. Similarly, electric power is transmitted to excitation devices for many known synchronous generators via slip rings and brushes.

However, most known slip rings are coupled to a rotating element and the brushes are typically coupled to a stationary brush rig, or ring. The stationary brushes require physical contact with the rotating slip rings to establish sufficient electrical conductivity between the slip rings and the brushes. Since most known brushes include carbon as the primary conductive constituent, and carbon is a relatively soft and friable substance, mechanical wear of the brushes as a result of contact during operation is inherent. Therefore, most known brushes require routine operational inspections for proper contact with the slip rings and wear. Also, these known brushes require routine replacement as operational wear progresses. Moreover, uneven wear of some of the brushes as compared to the other brushes may require more frequent inspections and planned equipment shutdowns and/or premature or unplanned equipment shutdowns. Furthermore, the inherent wear of the brushes creates carbon dust that is conductive, abrasive, and can be, a nuisance, thereby requiring additional and more frequent inspections of nearby equipment and an increased frequency of maintenance cleaning of such nearby equipment. Such increased frequencies of inspections, cleaning, and brush replacement result in increased operational costs associated with such electric power systems.

In one aspect according to the present invention, a method of assembling an electric power system is provided. The method includes coupling a power converter to an electric current source. The method also includes coupling a stationary portion of a rotary transformer to the power converter. The method further includes coupling a rotatable portion of the rotary transformer to a load device.

In another aspect, a commutation device is provided. The commutation device includes a transformer device. The transformer device includes a rotatable portion. The commutation device also includes a power converter operatively coupled to the transformer device.

In yet another aspect, an electric power system is provided. The electric power system includes a substantially stationary primary portion coupled to an electric current source. The substantially stationary primary portion includes a power converter. The electric power system also includes a rotatable secondary portion electromagnetically coupled to the substantially stationary primary portion.

Various features, aspects, and advantages of the present invention will become better understood when the following detailed description is read with reference to the accompanying drawings in which like characters represent like parts throughout the drawings, wherein:

Fig. 1 is a schematic view of an exemplary electric power system;

Fig. 2 is a schematic view of an exemplary rotary transformer that may be used with the electric power system shown in Fig. 1; and

Fig. 3 is a flow chart of an exemplary method of assembling the electric power system shown in Fig. 1.

Unless otherwise indicated, the drawings provided herein are meant to illustrate key inventive features of the invention. These key inventive features are believed to be applicable in a wide variety of systems comprising one or more embodiments of the invention. As such, the drawings are not meant to include all conventional features known by those of ordinary skill in the art to be required for the practice of the invention.

In the following specification and the claims, which follow, reference will be made to a number of terms, which shall be defined to have the following meanings.

The singular forms "a", "an", and "the" include plural references unless the context clearly dictates otherwise.

"Optional" or "optionally" means that the subsequently described event or circumstance may or may not occur, and that the description includes instances where the event occurs and instances where it does not.

Approximating language, as used herein throughout the specification and claims, may be applied to modify any quantitative representation that could permissibly vary without resulting in a change in the basic function to which it is related. Accordingly, a value modified by a term or terms, such as "about" and "substantially", are not to be limited to the precise value specified. In at least some instances, the approximating language may correspond to the precision of an instrument for measuring the value. Here and throughout the specification and claims, range limitations may be combined and/or interchanged, such ranges are identified and include all the sub-ranges contained therein unless context or language indicates otherwise.

The exemplary systems and methods described herein may overcome disadvantages of known electric power systems by providing an electric power system with rotating elements that facilitates transmitting electric power without slip rings and brushes. Specifically, the electric power system may include a power converter coupled in series with a rotary transformer. More specifically, the electric power system can include a power converter that includes a high-frequency, square wave alternating current (AC) frequency inverter, a resonant decoupling capacitor, and a secondary side rectifier coupled in series. The electric power system can also include a secondary side decoupling capacitor coupled to the stationary primary windings of the rotary transformer. Further, more specifically, the electric power system may include a rotatable secondary side rectifier coupled to the rotatable secondary windings of the rotary transformer. The electric power system can include a secondary side bulk capacitor coupled between the rotatable secondary windings and an electrical load. The elimination of slip rings and the associated brushes facilitates a reduction in operational costs associated with inspections, replacement, and cleaning activities typically associated with brush wear. Also, premature or unplanned equipment shutdowns due to uneven or otherwise accelerated brush wear are reduced, thereby facilitating an increase in reliability of the equipment. Further, the primary and secondary windings of the rotary transformer are coupled to a base structure that facilitates heat removal from the windings and adjacent components while operating as a heat sink. Moreover, elimination of bulky stationary transformers facilitates reducing a physical footprint and weight of such electric power systems, thereby facilitating a reduction in cost.

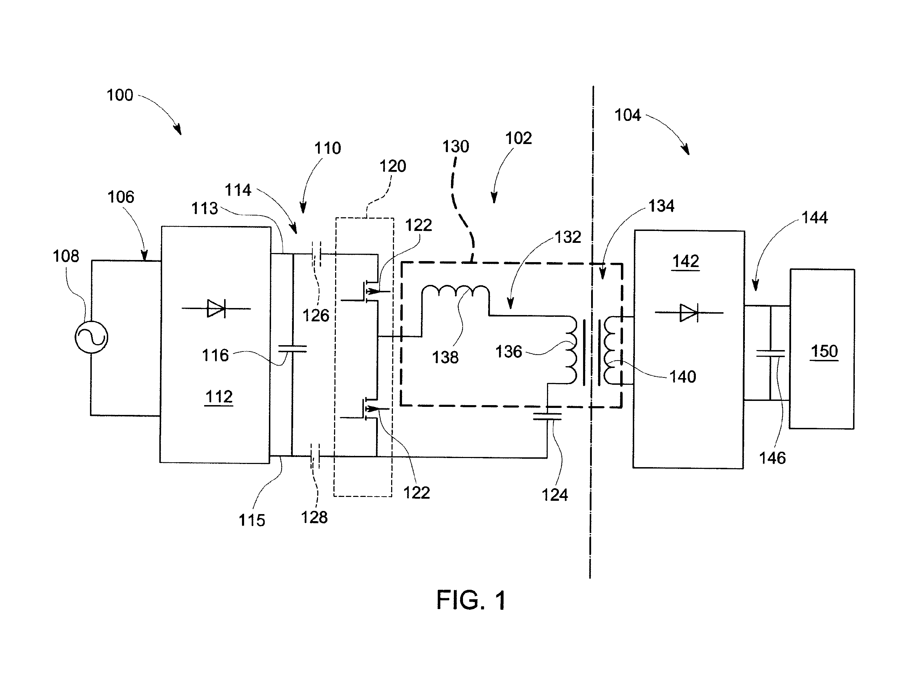

FIG. 1 is a schematic view of an exemplary electric power system 100. In the exemplary embodiment, electric power system 100 is an electric commutation device and includes a primary portion 102 and a secondary portion 104. Primary portion 102 includes a coupling 106 that couples primary portion 102 to an alternating current (AC) source 108. AC source 108 is either a three-phase AC source or a single-phase AC source at any voltage rating, any power rating, and any frequency rating that enables operation of electric power system 100 as described herein.

Also, in the exemplary embodiment, primary portion 102 includes a power converter 110 coupled to AC source 108 via coupling 106. Power converter 110 includes a rectifier 112 that includes any rectification devices (not shown) that enable operation of electric power system 100 as described herein including, without limitation, rectifier diodes in a half-bridge configuration and a full-bridge configuration. Power converter 110 also includes a direct current (DC) link 114 coupled to rectifier 112, wherein DC link 114 includes a positive rail 113 and a negative rail 115. DC link 114 includes at least one input smoothing capacitive device 116 that facilitates reducing a DC ripple of incoming rectified DC power.

Power converter 110 further includes an inverter 120 coupled to DC link 116. In the exemplary embodiment, inverter 120 is high-frequency, square wave, half-bridge inverter. Alternatively, inverter 120 is any inverter device that enables operation of electric power system 100 as described herein including, without limitation, a full-bridge converter. Also, in the exemplary embodiment, inverter 120 includes any number of any electronic devices 122 that enables operation of electric power system 100 as described herein including, without limitation, insulated gate bipolar transistors (IGBTs) and metal-oxide semiconductor field-effect transistors (MOSFETs). Control of inverter 120 is attained via any means that enables operation of electric power system 100 as described herein including, without limitation, controllers coupled to inverter 120 by radio-frequency (RF) devices and firmware affixed therein.

Alternatively, rather than rectifying AC power, electric power system 100 includes an alternative power converter (not shown) that includes inverter 120 coupled to a DC power source (not shown) at any voltage rating and any power rating that enables operation of electric power system 100 as described herein.

Further, in the exemplary embodiment, primary portion 102 includes at least one resonant decoupling capacitor 124 coupled to inverter 120 and downstream of electronic devices 122. Alternatively, resonant decoupling capacitor 124 may include, or be replaced with, a plurality of resonant decoupling capacitors 126 and 128 (both shown in phantom) and upstream of electronic devices 122. Resonant decoupling capacitor 126 is coupled to positive rail 113 and resonant decoupling capacitor 128 is coupled to negative rail 115. Regardless of the configuration, resonant decoupling capacitors 124, 126, and 128 have a total capacitive value C.

In the exemplary embodiment, electric power system 100 includes a rotary transformer 130 that includes a primary section 132 positioned within primary portion 102 of electric power system 100 and a secondary section 134 positioned within secondary portion 104 of electric power system 100. Primary section 132 of rotary transformer 130 includes a plurality of primary windings 136 coupled to inverter 120. Also, primary section 132 has a stray inductance 138, wherein stray inductance, as used herein, includes a sum of distributed inductances within primary portion 102, and stray inductance 138 has a total inductive value L. Stray inductance 138 is compensated for by resonant decoupling capacitors 124, 126, and/or 128, thereby facilitating an output voltage stiffness independent of any loading downstream of primary windings 136.

Also, in the exemplary embodiment, secondary portion 104 of electric power system 100 includes secondary section 134 of rotary transformer 130. Secondary section 134 includes secondary windings 140 that are electromagnetically coupled to primary windings 136. Secondary portion 104 also includes a rectifier 142 that is rotatably coupled to secondary windings 140. Rectifier 142 includes any rectification devices (not shown) that enable operation of electric power system 100 as described herein including, without limitation, rectifier diodes. Secondary section 134 also includes a DC link 144 rotatably coupled to rectifier 142. DC link 144 includes at least one output smoothing capacitive device 146 that facilitates reducing a DC ripple of outgoing rectified DC power. Secondary portion 104 of electric power system 100 is rotatably coupled to a load device 150. In the exemplary embodiment, load device 150 is a DC device. Alternatively, load device 150 is an AC device and an inverter similar to inverter 120 is positioned between load device 150 and rectifier 142. In some embodiments, load device 150 is compatible with an AC voltage induced within secondary windings 140 and rectifier 142, DC link 144, and capacitive device 146 are eliminated and load device 150 is directly coupled to secondary windings 140. Rotary transformer 130 is discussed further below.

In operation, electric power system 100 functions as an electric commutation device. AC source 108 transmits either three-phase AC or single-phase AC at any voltage with any frequency at any current that enables operation of electric power system 100 as described herein to provide load device 150 with the necessary electric power. Power converter 110 receives the electric power transmitted from AC source 108 via coupling 106. Rectifier 112 of power converter 110 rectifies the AC voltage and generates a substantially DC voltage that is at least partially smoothed by input smoothing capacitive device 116 of DC link 114, thereby facilitating a reduction of a DC ripple of the incoming rectified DC voltage. The rectified DC voltage is transmitted to inverter 120 that generates and transmits an AC voltage to primary windings 136. Alternatively, a DC source transmits DC power to inverter 120.

In the exemplary embodiment, the switching frequency of electronic devices 122 is in a range defined by the relationship:

$$0.8/ [2 * \pi *\mathrm{sqrt}(L * C)] < f < 1.5/[2 * \pi *\mathrm{sqrt}(L * C)] \qquad \mathrm{Eq.\ (1)}$$

wherein, L represents a total inductive value of stray inductance 138, C represents a total capacitive value of resonant decoupling capacitors 124, 126, and 128, and f represents the switching frequency. Moreover, in the exemplary embodiment, values of C and L are selected to determine a switching frequency between approximately 1 kiloHertz (kHz) and 200 kHz.

Also, in operation, primary windings 136 are electro-magnetically coupled to secondary windings 140 and an AC voltage is induced therein. The induced AC voltage is transmitted to rectifier 142 that rectifies the induced AC voltage and generates a substantially DC voltage that is at least partially smoothed by input smoothing capacitive device 116 of DC link 144, thereby facilitating a reduction of a DC ripple of the outgoing rectified DC voltage. Load device 150 receives, and is driven by, the rectified DC voltage.

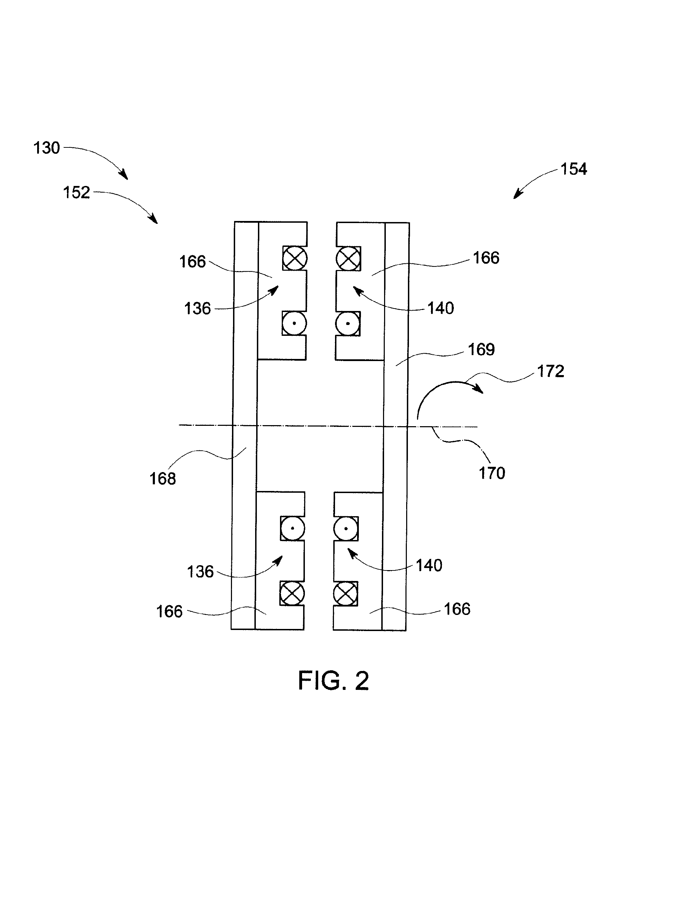

FIG. 2 is a schematic view of exemplary rotary transformer 130 that is used with electric power system 100 (shown in FIG. 1). Rotary transformer 130 includes a stationary portion 162 and a rotatable portion 164 axially and symmetrically opposite to stationary portion 162. In the exemplary embodiment, stationary portion 162 includes primary windings 136 and rotatable portion 164 includes secondary windings 140. Alternatively, stationary portion 162 includes secondary windings 140 and rotatable portion 164 includes primary windings 136. Primary windings 136 and secondary windings 140 are nested in E-core halves 166. Alternatively, primary windings 136 and secondary windings 140 are nested in any core configuration that enables operation of electric power system 100 as described herein including, without limitation, U-core halves. E-core-halves 166 are coupled to a primary support plate 168 and a secondary support plate 169. In addition to providing support to E-core-halves 166 and windings 136 and 140, support plates 168 and 169 act as heat sinks to facilitate heat transfer away from primary windings 136 and electronic devices 122 of inverter 120 (both shown in FIG. 1) and secondary windings 140 and diode rectifiers in rectifier 142 (shown in FIG. 1), respectively. Rotary transformer 130 defines an axial rotational axis 170 about which rotatable portion 164 rotates as shown by rotational arrow 172.

In operation, stationary primary windings 136 are energized by a primary AC voltage having a predetermined voltage amplitude and predetermined frequency that is transmitted from inverter 120 (shown in FIG. 1). An electromagnetic field (not shown) is established between primary windings 136 and initially stationary secondary windings 140. A secondary AC voltage is induced within secondary windings 140 at a predetermined voltage value that is a function of the primary AC voltage and a transformation ratio of transformer 130. The secondary AC voltage has a frequency that is substantially similar to the frequency of the primary AC voltage. The secondary AC voltage is transmitted to rectifier 142 (shown in FIG. 1) and is rectified to a DC voltage having a predetermined voltage amplitude. The DC voltage induces a DC current that is transmitted to load device 150 that accelerates from a substantially stationary condition to a rotating condition at a predetermined rotational velocity. Rotating load device 150 also rotates DC link 144, rectifier 142, and secondary windings 140 in the direction of rotational arrow 172.

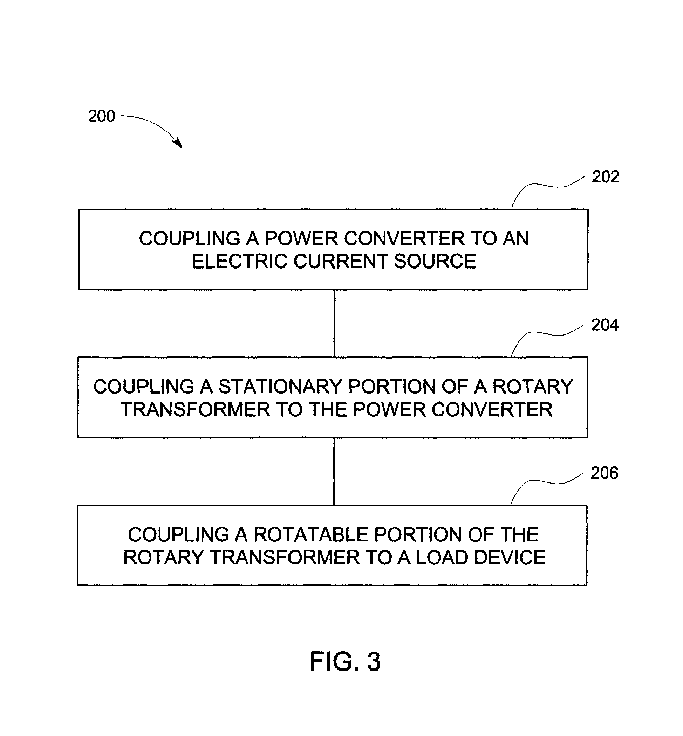

FIG. 3 is a flow chart of an exemplary method 200 of assembling electric power system 100 (shown in FIG. 1). In the exemplary embodiment, power converter 110 (shown in FIG. 1) is coupled (202) to an electric current source, i.e., AC source 108 (shown in FIG.1), or a DC source. Also, in the exemplary embodiment, stationary portion 162 (shown in FIG. 2) of rotary transformer 130 (shown in FIGs. 1 and 2) is coupled 204 to power converter (110). Further, in the exemplary embodiment rotatable portion 164 (shown in FIG. 1) of rotary transformer 130 is coupled to load device 150 (shown in FIG.1).

The above-described electric power system provides a cost effective method for increasing a reliability of electric power systems during operations thereof. Specifically, the electric power system facilitates transmitting electric power without slip rings and brushes. The electric power system includes a power converter coupled in series with a rotary transformer. More specifically, the electric power system includes a power converter that includes a high-frequency, square wave alternating current (AC) frequency inverter, a resonant decoupling capacitor, and a secondary side rectifier coupled in series. The electric power system also includes a secondary side decoupling capacitor coupled to the stationary primary windings of the rotary transformer. Further, the electric power system includes a rotatable secondary side rectifier coupled to the rotatable secondary windings of the rotary transformer. In addition, the electric power system includes a secondary side bulk capacitor coupled between the rotatable secondary windings and an electrical load. The elimination of slip rings and the associated brushes facilitates a reduction in operational costs associated with inspections, replacement, and cleaning activities typically associated with brush wear. Also, premature or unplanned equipment shutdowns due to uneven or otherwise accelerated brush wear are reduced, thereby facilitating an increase in reliability of the equipment. Further, the primary and secondary windings of the rotary transformer are coupled to a base structure that facilitates heat removal from the windings and adjacent components while operating as a heat sink. Moreover, elimination of bulky stationary transformers facilitates reducing a physical footprint and weight of such electric power systems, thereby facilitating a reduction in cost.

Exemplary embodiments of systems and methods for operating and assembling an electric power system are described above in detail. The system and methods are not limited to the specific embodiments described herein, but rather, components of systems and/or steps of the method may be utilized independently and separately from other components and/or steps described herein. For example, the systems and methods may also be used in combination with other rotary engine systems and methods, and are not limited to practice with only the electric power system as described herein. Rather, the exemplary embodiment can be implemented and utilized in connection with many other rotary system applications.

Although specific features of various embodiments of the invention may be shown in some drawings and not in others, this is for convenience only. Moreover, references to "one embodiment" in the above description are not intended to be interpreted as excluding the existence of additional embodiments that also incorporate the recited features. In accordance with the principles of the invention, any feature of a drawing may be referenced and/or claimed in combination with any feature of any other drawing.

This written description uses examples to disclose the invention, including the preferred mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

Various aspects and embodiments of the present invention are defined by the following numbered clauses:

1. A method of assembling an electric power system comprises:

coupling a power converter to an electric current source;

coupling a stationary portion of a rotary transformer to the power converter; and

coupling a rotatable portion of the rotary transformer to a load device.

2. A method in accordance with Clause 1, wherein coupling a power converter to an electric current source comprises coupling at least one capacitive device to the power converter to at least partially facilitate determining a switching frequency of the power converter.

3. A method in accordance with any preceding Clause, wherein determining a switching frequency of the power converter comprises determining a stray inductance of a portion of the electric power system.

4. A method in accordance with any preceding Clause, wherein coupling a stationary portion of a rotary transformer to the power converter comprises coupling a stationary heat sink to the stationary portion of the rotary transformer to receive heat energy from at least one of a plurality of substantially stationary primary windings positioned within the stationary portion of the rotary transformer and a plurality of electronic devices positioned within the power converter.

5. A method in accordance with any preceding Clause, wherein coupling a rotatable portion of a rotary transformer to a load device comprises rotatably coupling a heat sink to the rotatable portion of the rotary transformer to receive heat energy from at least one of a plurality of rotatable secondary windings positioned within the rotatable portion of the rotary transformer and a rectifier coupled to the load device.

6. A method in accordance with any preceding Clause, wherein coupling a power converter to an electric current source comprises at least one of:

coupling at least one of a half-bridge rectifier and a full-bridge rectifier to a single-phase AC source; and

coupling at least one of a half-bridge rectifier and a full-bridge rectifier to a three-phase AC source.

7. A method in accordance with any preceding Clause, wherein coupling a stationary portion of a rotary transformer to the power converter comprises coupling at least one of a half-bridge inverter and a full-bridge inverter to a plurality of primary windings within the rotary transformer.

8. A commutation device comprising:

a transformer device comprising a rotatable portion; and

a power converter operatively coupled to said transformer device.

9. A commutation device in accordance with any preceding Clause, further comprising at least one rectifier coupled to said transformer device.

10. A commutation device in accordance with any preceding Clause, wherein said transformer device comprises a stationary portion comprising a plurality of primary windings coupled to said power converter, said rotatable portion comprising a plurality of secondary windings rotatable with respect to said plurality of primary windings, said plurality of secondary windings coupled to at least one rectifier.

11. A commutation device in accordance with any preceding Clause, wherein said transformer device comprises:

at least one primary-side heat sink coupled to at least one of said power converter and said plurality of primary windings; and

at least one secondary-side heat sink coupled to at least one of said rectifier and said plurality of secondary windings.

12. A commutation device in accordance with any preceding Clause, wherein said transformer device at least partially defines a stray inductance, said commutation device further includes at least one capacitive device that cooperates with the stray inductance to determine a switching frequency of said power converter.

13. A commutation device in accordance with any preceding Clause, wherein said rotatable portion of said transformer device is rotatably coupled to a rotatable load device, and wherein powering of the load device by said transformer device induces rotational movement of said rotatable portion of said transformer device.

14. A commutation device in accordance with any preceding Clause, wherein said power converter includes at least one of:

a half-bridge rectifier coupled to at least one of a single-phase and a three-phase alternating current (AC) source;

a full-bridge rectifier coupled to at least one of a single-phase and a three-phase AC source;

a half-bridge inverter coupled to a plurality of primary windings within said transformer device; and

a full-bridge rectifier coupled to a plurality of primary windings within said transformer device.

15. An electric power system comprising:

a substantially stationary primary portion coupled to an electric current source, said substantially stationary primary portion comprises a power converter; and

a rotatable secondary portion electromagnetically coupled to said substantially stationary primary portion.

16. An electric power system in accordance with any preceding Clause, wherein said substantially stationary primary portion and said rotatable secondary portion define a rotary transformer.

17. An electric power system in accordance with any preceding Clause, wherein said power converter is coupled to a plurality of primary windings within said rotary transformer.

18. An electric power system in accordance with any preceding Clause, further comprising at least one primary-side heat sink coupled to at least one of said power converter and said plurality of primary windings.

19. An electric power system in accordance with any preceding Clause, wherein said rotary transformer comprises a plurality of secondary windings rotatably coupled to a load device, wherein energization of the load device induces rotation of said plurality of secondary windings.

20. An electric power system in accordance with any preceding Clause, further comprising at least one secondary-side heat sink coupled to at least one of a rectifier and said plurality of secondary windings.

**Claims**

1. A commutation device (100) comprising:

   a transformer device (130) comprising a rotatable portion (164); and
   a power converter (110) operatively coupled to said transformer device.

2. A commutation device (100) in accordance with Claim 1, further comprising at least one rectifier (112/142) coupled to said transformer device (130).

3. A commutation device (100) in accordance with any preceding Claim, wherein said transformer device (130) comprises a stationary portion (162) comprising a plurality of primary windings (136) coupled to said power converter (110), said rotatable portion (164) comprising a plurality of secondary windings (140) rotatable with respect to said plurality of primary windings, said plurality of secondary windings coupled to at least one rectifier (142).

4. A commutation device (100) in accordance with Claim 3, wherein said transformer device (130) comprises:

   at least one primary-side heat sink (168) coupled to at least one of said power converter (110) and said plurality of primary windings (136); and
   at least one secondary-side heat sink (169) coupled to at least one of said rectifier (142) and said plurality of secondary windings (140).

5. A commutation device (100) in accordance with any preceding Claim, wherein said transformer device (130) at least partially defines a stray inductance, said commutation device further includes at least one capacitive device (124/126/128) that cooperates with the stray inductance to determine a switching frequency of said power converter (110).

6. A commutation device (100) in accordance with any preceding Claim, wherein said rotatable portion (164) of said transformer device (130) is rotatably coupled to a rotatable load device (150), and wherein powering of the load device by said transformer device induces rotational movement of said rotatable portion of said transformer device.

7. A commutation device (100) in accordance with any preceding Claim, wherein said power converter (110) includes at least one of:

   a half-bridge rectifier (112) coupled to at least one of a single-phase and a three-phase alternating current (AC) source (108);

a full-bridge rectifier (112) coupled to at least one of a single-phase and a three-phase AC source (108);
a half-bridge inverter (120) coupled to a plurality of primary windings (136) within said transformer device (130); and
a full-bridge rectifier (120) coupled to a plurality of primary windings within said transformer device.

8. An electric power system (100) comprising:

a substantially stationary primary portion coupled to an electric current source, said substantially stationary primary portion comprises a power converter; and
a rotatable secondary portion electromagnetically coupled to said substantially stationary primary portion.

9. An electric power system (100) in accordance with Claim 8, wherein said substantially stationary primary portion and said rotatable secondary portion define a rotary transformer.

10. An electric power system (100) in accordance with Claim 9, wherein said power converter is coupled to a plurality of primary windings within said rotary transformer.

FIG. 1

FIG. 2

200

202

```
COUPLING A POWER CONVERTER TO AN
ELECTRIC CURRENT SOURCE
```

204

```
COUPLING A STATIONARY PORTION OF A ROTARY
TRANSFORMER TO THE POWER CONVERTER
```

206

```
COUPLING A ROTATABLE PORTION OF THE
ROTARY TRANSFORMER TO A LOAD DEVICE
```

FIG. 3